# EUROPÄISCHE PATENTANMELDUNG

(11) **EP 1 160 060 A1**
(43) Veröffentlichungstag der Anmeldung: **05.12.2001**
(21) Anmeldenummer: 01112116.7
(22) Anmeldetag: 17.05.2001
(51) Int. Cl.: B26D 1/04, E04D 15/02

(54) **Vorrichtung zum Ablängen und Zuschneiden von Bleinoggen von einer Bleirolle**

(30) Priorität: 18.05.2000 DE 10024125
(71) Anmelder: Wolfgang Rissewyck, 47057 Duisburg (DE)
(72) Erfinder: Wolfgang Rissewyck, 47057 Duisburg (DE)
(74) Vertreter: Funken, Josef, Dipl.-Ing.

(57) **Zusammenfassung**

Bei einer Vorrichtung zum Ablängen und Zuschneiden von Bleinoggen von einer Bleirolle mit einer vom Boden distanzierten Grundplatte von bestimmter Länge und bestimmter Breite ist vorgesehen, daß
- am vorderen Ende der Grundplatte eine Lagerung für die Bleirolle angebracht,
- im mittleren Bereich der Grundplatte als Einrichtung zum Ablängen und Zuschneiden der Bleinoggen eine in einem Schwenkgelenk gelagerte Führungsschiene mit einer Führungsnut für die Aufnahme und Führung einer Messerklinge vorgesehen,
- die Führungsschiene in eine quer und in eine schräg zur Längsrichtung der Bleibahn verlaufende Position sowie in beliebige Zwischenpositionen zu bringen,
- am rückwärtigen Ende der Grundplatte zwei Führungsleisten angebracht sind,
- in der Grundplatte ein sich keilförmig von der einen Seite zur anderen Seite verbreitender Durchbruch vorgesehen,
- an der einen Seite der Grundplatte innerhalb des Durchbruches die Führungsschiene schwenkbeweglich über den Bereich des Ausbruches gelagert und
- an der Führungsschiene ein Schwenkhebel angeordnet ist, der an der gegenüberliegenden Seite der Grundplatte nach unten abgebogen ist, über den die Führungsschiene mit einem Knie des Benutzers dieser Vorrichtung hin- und herschwenkbar bzw. festhaltbar ist (Fig. 1).

## Beschreibung

Die Erfindung befaßt sich mit dem Ablängen und Zuschneiden von Bleinoggen von einer Bleirolle.

Gemäß der bisherigen Arbeitsweise im Dachdeckerhandwerk wird zur Herstellung von Bleinoggen eine Bleirolle vollständig auf dem Boden ausgerollt, von deren Ende die Bleinoggen abgeschnitten werden, in dem ein Stück einer gerade in der Nähe befindlichen Dachlatte oder eines Brettes oder dergleichen zum Abschneiden eines Stückes Blei von der Bleirolle benutzt wird. Bei dieser primitiven Art des Ablängens und des Zuschneidens von Bleinoggen besteht für die Dachdecker eine erhebliche Unfallgefahr, indem Sie sich durch unkontrolliertes Schneiden, wie sich in der Praxis des öfteren erwiesen hat, schwere Schnittwunden und Verletzungen zufügen können.

In der DE 44 31 690 C2 ist eine Vorrichtung zum Ablängen und Zuschneiden von Bleinoggen von einer Bleirolle mit einer Grundplatte von bestimmter Länge und bestimmter Breite beschrieben. Am einen Ende der Grundplatte ist eine Lagerung für eine Bleirolle ang.ebracht. Außerdem ist mit geringem Abstand vor der Bleirolle eine Niederhalterstange vorgesehen, wobei die Bleibahn zwischen der Niederhalterstange und der Grundplatte hindurchgeführt und in Richtung zum anderen Ende der Grundplatte zu ziehen ist. Im mittleren Bereich der Grundplatte ist als Einrichtung zum Ablängen und Zuschneiden der Bleinoggen eine in einem Schwenkgelenk gelagerte Führungsleiste für die Aufnahme und Führung eines Messers vorgesehen. Dabei ist die Führungsleiste in eine quer und in eine schräg zur Längsrichtung der Bleibahn verlaufende Position zu bringen.

Außerdem ist im mittleren Bereich der Grundplatte eine quer zur Längsachse der Grundplatte und wenigstens eine schräg dazu verlaufende Nut für das Messer vorgesehen. Am anderen Ende der Grundplatte ist eine Führung angebracht, in der ein Anschlag längsbeweglich geführt und festlegbar ist. Außerdem sind in der Grundplatte im Bereich zwischen der Führungsleiste und dem Ende der Grundplatte in bestimmtem Abstand zueinander Längsnuten vorgesehen, in die die Klinge des Messers ebenso wie in die Quernut oder Schrägnut eintaucht.

Die Lagerung für die Bleirolle besteht aus zwei an der Grundplatte gegenüberliegend angeordneten Lagerböcken mit je einem zugehörigen Drehlager.

Bei dieser bekannten Vorrichtung bringt der Handwerker die Führungsleiste mit der einen Hand, im allgemeinen der linken Hand, in die gewünschte Position und hält sie mit dieser Hand dort fest, während er gleichzeitig mit der anderen Hand, im allgemeinen der rechten Hand, mit dem Messer die Bleinogge von dem Bleiband abschneidet. Das bedeutet, daß der Handwerker beide Hände zum Positionieren der Führungsleiste und zum Ablängen der Bleinogge benötigt. Es wäre wünschenswert, wenn die Führungsschiene ohne Zuhilfenahme der einen Hand zu positionieren und festzulegen wäre.

Aus der US 10 92 381 ist eine Vorrichtung zum Zuschneiden von Schindeln bekannt. Die bekannte Vorrichtung zum Zuschneiden von Schindeln läßt lediglich ein jeweiliges rechtwinkliges Zuschneiden von Schindeln zu, nicht jedoch ein Zuschneiden von Bleinoggen mit einem schräg zur Längsrichtung des Bleibleches verlaufenden Schnitt.

In der DE 29 41 939 A1 ist eine Vorrichtung zum Abtrennen oder Schneiden von Bahnmaterial mit schrägverlaufender Schnittkante mittels eines Schneid- oder Trennmessers beschrieben, insbesondere zum Abtrennen von Tapetenstücken beim Tapezieren von Wänden, Decken und dergleichen, wobei ein längeneinstellbarer Schneidbalken oder eine Schneidschiene mit Führungskante für ein Schneid- oder Trennmesser zwischen endseitigen Klemmstützen horizontal verschwenkbar befestigt ist.

Diese Vorrichtung kann so ausgebildet sein, daß der Schneidbalken oder die Schneidschiene aus zwei teleskopartig ineinanderschiebbaren Teilen mit einem im wesentlichen kastenförmigen Querschnitt besteht, die an ihrer flachen oberen Längsseite einen von einem Teil zum anderen durchgehenden Führungsschlitz für das Schneid- oder Trennmesser aufweisen. Die beiden Teile des Schneidbalkens oder der Schneidschiene können mittels einer Klemmschraube oder dergleichen gegeneinander festspannbar sein.

Es geht hierbei um das Ablängen von Tapetenbahnen, wobei das Ablängen rechtwinklig oder schiefwinklig erfolgen kann. Die Tapetenbahn ist oberhalb der Schneidschiene geführt und wird dadurch geschnitten, daß von einer Seite zur anderen durch eine Nut der Schneidschiene ein Messer geführt wird. Wenn das Messer scharf genug ist, läßt sich die Papierbahn abtrennen bzw. ablängen, ohne diese festhalten zu müssen, weil die Papierbahn der Schneide des Messers lediglich einen vernachlässigbaren Widerstand entgegenhält.

Das Schneiden einer Blechbahn oder einer Bleibahn zur Herstellung von teilweise rechtwinkligen und teilweise schiefwinkligen Bleinoggen läßt sich auf dem Tapeziertisch gemäß der bekannten Vorrichtung nicht durchführen. Allein schon deswegen nicht, weil die Bleibahn der Messerschneide einen derart hohen Widerstand entgegenhielte, daß die Bleibahn durch das Messer quer verschoben würde. Daher ist es zum Ablängen von Bleinoggen wichtig, daß der Tendenz entgegengewirkt wird, sich seitlich zu verschieben.

Der Erfindung liegt die Aufgabe zugrunde, eine Vorrichtung zum Ablängen und Zuschneiden von Bleinoggen zu schaffen, die so ausgebildet ist, daß der Handwerker beide Hände zum Bewegen und Halten der Bleibahn sowie zum Schneiden der Bleinogge frei hat.

Zur Lösung dieser Aufgabe besteht die Erfindung in einer Vorrichtung zum Ablängen und Zuschneiden von Bleinoggen von einer Bleirolle mit einer vom Boden distanzierten Grundplatte von bestimmter Länge und bestimmter Breite,
- wobei am vorderen Ende der Grundplatte eine Lagerung für die Bleirolle angebracht,
- im mittleren Bereich der Grundplatte als Einrichtung zum Ablängen und Zuschneiden der Bleinoggen eine in einem Schwenkgelenk gelagerte Führungsschiene mit einer Führungsnut für die Aufnahme und Führung einer Messerklinge vorgesehen,
- die Führungsschiene in eine quer und in eine schräg zur Längsrichtung der Bleibahn verlaufende Position sowie in beliebige Zwischenpositionen zu bringen,
- am rückwärtigen Ende der Grundplatte zwei Führungsleisten angebracht sind,
- in der Grundplatte ein sich keilförmig von der einen Seite zur anderen Seite verbreitender Durchbruch vorgesehen,
- an der einen Seite der Grundplatte innerhalb des Durchbruches die Führungsschiene schwenkbeweglich über den Bereich des Ausbruches gelagert und
- an der Führungsschiene ein Schwenkhebel angeordnet ist, der an der gegenüberliegenden Seite der Grundplatte nach unten abgebogen ist, über den die Führungsschiene mit einem Knie des Benutzers dieser Vorrichtung hin- und herschwenkbar bzw. festhaltbar ist.

Hierdurch ist die Möglichkeit geschaffen, daß der Handwerker vor der Vorrichtung kniend mit dem einen Knie gegen den Schwenkhebel andrückt und dadurch die Führungsschiene in ihrer gewünschten Position hält bzw. sie in eine andere Position bewegt, während er gleichzeitig beide Hände zum Bewegen und Festhalten der Bleibahn sowie zum Schneiden der Bleinogge frei hat.

In weiterer Ausgestaltung der Erfindung kann vorgesehen sein, daß in einer Zusatzplatte zur Grundplatte im Bereich zwischen der Führungsleiste und dem Ende der Zusatzplatte in bestimmtem Abstand zueinander Längsnuten vorgesehen sind, in denen die Messerklinge ebenso wie in der Quernut oder Schrägnut geführt ist.

Die Vorrichtung kann auch so ausgebildet sein, daß die Führungsleiste über das eine Ende der Vorrichtung hinaus verlängert und nach unten abgewinkelt ist.

Zweckmäßigerweise kann die Anordnung so getroffen sein, daß zu beiden Seiten der Grundplatte in geringer Entfernung von den beiden Seiten der Grundplatte je ein Längenmaßstab mit steigender Länge in Richtung des vorderen Endes der Grundplatte angebracht ist.

Außerdem empfiehlt es sich, die Vorrichtung so auszubilden, daß auf der Grundplatte ein weiteres Längenmaß mit steigender Länge in Richtung des rückwärtigen Endes der Grundplatte vorgesehen ist.

Die Erfindung wird nachfolgend anhand eines in der Zeichnung dargestellten Ausführungsbeispieles des näheren erläutert. Es zeigt:
- Figur 1: eine perspektivische Darstellung der erfindungsgemäß ausgebildeten Vorrichtung von einer vorderen Ecke der Vorrichtung aus,
- Figur 2: eine perspektivische Darstellung auf die Vorrichtung von dem rückwärtigen Ende der Vorrichtung aus,
- Figur 3: eine perspektivische Darstellung ähnlich derjenigen gemäß Figur 1 mit einer von einer Bleirolle teilweise abgerollten Bleibahn und
- Figur 4: eine perspektivische Darstellung der Vorrichtung vergleichbar der Darstellung gemäß Figur 2 mit teilweise von der Bleirolle abgerollter Bleibahn und am rückwärtigen Ende der Grundplatte angeordneter umgeknickter Bleinogge.

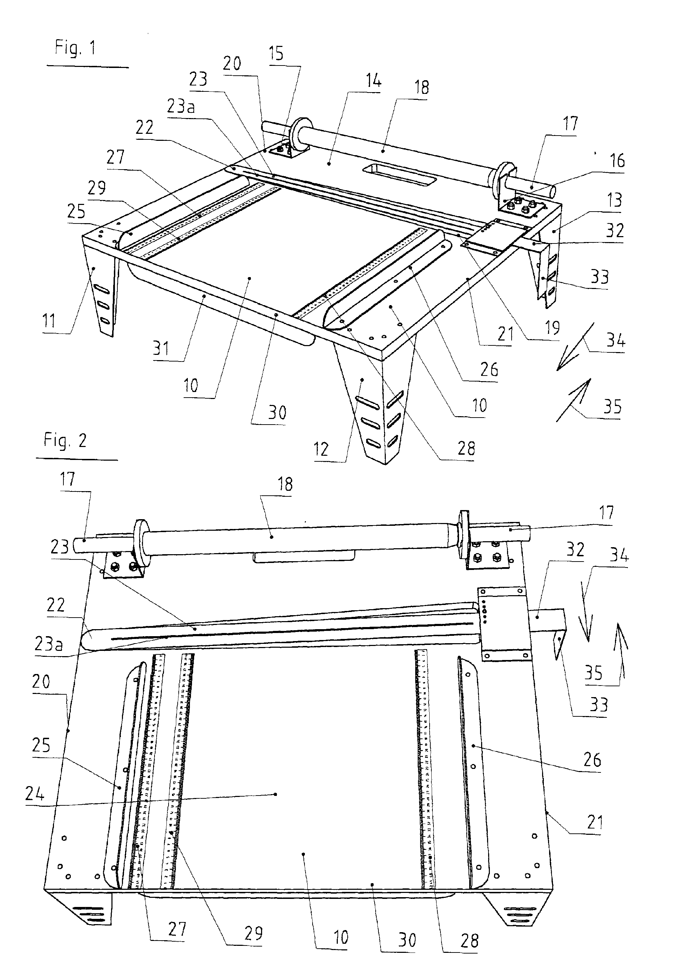

Die in der Zeichnung dargestellte Vorrichtung dient zum Ablängen und Zuschneiden von Bleinoggen von einer Bleirolle. Wie sich insbesondere aus Figur 1 ergibt, ist nach Art einer Tischplatte eine Grundplatte 10 auf Stempeln 11,12,13 gelagert. Am vorderen Ende 14 der Grundplatte 10 ist in zwei Lagerböcken 15,16 eine auf einer Welle 17 angeordneten Rolle 18 vorgesehen, auf der eine in den Figuren 1 und 2 nicht dargestellte Bleirolle anzuordnen ist.

In geringfügigem Abstand von der Rolle 18 ist in der Grundplatte 10 ein Durchbruch 19 vorgesehen, der sich von dem in der Zeichnung links dargestellten Ende 20 der Grundplatte 10 zum in der Zeichnung rechts dargestellten Ende 21 der Grundplatte 10 dreieckförmig erweitert. In einem Schwenkgelenk 22 ist eine im Bereich des Durchbruches 19 schwenkbeweglich angeordnete Führungsschiene 23 mit einer Längsnut 23a vorgesehen, die am rechten Ende 21 der Grundplatte 10 in verschiedenen Schwenkpositionen festlegbar ist.

Im mittleren und vorderen Bereich 24 der Grundplatte 10 sind links und rechts je eine Führungsleiste 25,26 in Längsrichtung der Grundplatte 10 angeordnet, zwischen denen die später noch zu beschreibende Bleibahn geführt ist. Parallel zu den Führungsleisten 25,26 sind auf der Grundplatte 10 zwei Maßstäbe 27,28 mit zum vorderen Ende der Grundplatte 10 hin steigender Längenanzeige angeordnet. Ein weiterer Maßstab 29 ist parallel zu dem einen Maßstab 27 vorgesehen. Der Maßstab 29 hat in umgekehrter Richtung wie die Maßstäbe 27,28 steigende Längenanzeige.

Am vorderen Ende 30 der Grundplatte 10 ist eine Kantleiste 31 angebracht, über die eine abgelängte Bleinogge geknickt bzw. gekantet werden kann.

Die Führungsschiene 23 ist über das rechte Ende 21 der Grundplatte 10 hinausgeführt und nach unten abgebogen und bildet dort einen Hebel 32, gegen dessen abwärts gerichtetes Hebelteil 33 durch eine Kraft von vorn nach rückwärts in Richtung des Pfeiles 34 und durch eine Kraft von rückwärts nach vorn in Richtung des Pfeiles 35 geschwenkt werden kann.

Der Handwerker kann, wenn er an der rechten Seite der Grundplatte vor der Vorrichtung sich kniend befindet, mit seinem rechten Knie eine Kraft in Richtung des Pfeiles 24 auf den Schwenkarm 32 bzw. mit seinem linken Knie eine Kraft in Richtung des Pfeiles 35 auf den Schwenkarm 32 ausüben und dadurch die Führungsschiene 23 in die gewünschte Position bringen und sie dort festhalten, wobei seine beiden Hände frei sind, um die abzuschneidende Bleinogge zu halten und diese entlang der Führungsschiene 23 abzuschneiden.

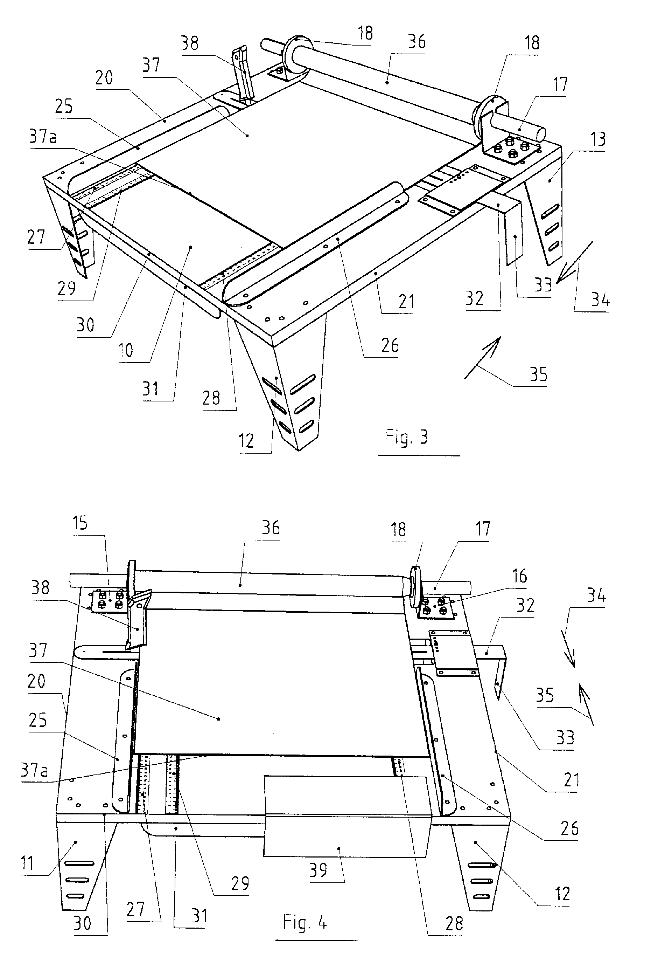

In Figur 3 ist die bezüglich der Figuren 1 und 2 vorstehend beschriebene Vorrichtung mit einer auf der Rolle 18 angeordneter Bleirolle 36 dargestellt, von der eine Bleibahn 37 bis etwa zur Mitte der Grundplatte 10 abgezogen ist. Die Bleibahn 37 liegt mit ihrem unteren Ende quer zur Längserstreckung der Grundplatte 10 zwischen den zwei Führungsleisten 25,26 und auf der schräg angeordneten Führungsschiene 23, in deren Nut 23a in der Nähe des Schwenkgelenkes 22 ein Messer 38 mit seiner Klinge steckt. Zum Ablängen einer Bleinogge in der erforderlichen Länge von der von der Bleirolle 36 abgezogenen Bleibahn 37 zieht der Handwerker das Messer 38 durch die Nut 23a der Führungsleiste 23 von dem in der Zeichnung links dargestellten Ende 20 der Grundplatte 10 zu deren rechter Seite 21, wodurch die Bleinogge exakt in den gewünschten Abmessungen abgeschnitten werden kann.

Die Vorrichtung gemäß Figur 4 zeigt zusätzlich gegenüber der in Figur 3 dargestellten Vorrichtung einen Teil einer abgetrennten Bleinogge 39, die um die Knickkante 31 derart geknickt bzw. gekantet ist, daß sie unmittelbar anschließend auf einem Dach, beispielsweise an einer Dachgaube oder dergleichen einzusetzen und dort zu befestigen ist.

### Bezugszeichenliste

- 10: Grundplatte
- 11: Stempel
- 12: Stempel
- 13: Stempel
- 14: vorderes Ende
- 15: Lagerbock
- 16: Lagerbock
- 17: Welle
- 18: Rolle
- 19: Durchbruch
- 20: linkes Ende
- 21: rechtes Ende
- 22: Gelenk
- 23: Führungsschiene
- 23a: Nut
- 24: mittlerer Bereich
- 25: Führungsleiste
- 26: Führungsleiste
- 27: Maßstab
- 28: Maßstab
- 29: Maßstab
- 30: rückwärtiges Ende
- 31: Knickkante
- 32: Verlängerungsarm
- 33: Hebelteil
- 34: Pfeil
- 35: Pfeil
- 36: Bleirolle
- 37: Bleibahn
- 37a: vorderes Ende
- 38: Messer
- 39: Bleinogge

## Patentansprüche

1. Vorrichtung zum Ablängen und Zuschneiden von Bleinoggen von einer Bleirolle mit einer vom Boden distanzierten Grundplatte von bestimmter Länge und bestimmter Breite, wobei
- am vorderen Ende der Grundplatte eine Lagerung für die Bleirolle angebracht,
- im mittleren Bereich der Grundplatte als Einrichtung zum Ablängen und Zuschneiden der Bleinoggen eine in einem Schwenkgelenk gelagerte Führungsschiene mit einer Führungsnut für die Aufnahme und Führung einer Messerklinge vorgesehen,
- die Führungsschiene in eine quer und in eine schräg zur Längsrichtung der Bleibahn verlaufende Position sowie in beliebige Zwischenpositionen zu bringen,
- am rückwärtigen Ende der Grundplatte zwei Führungsleisten angebracht sind,
- in der Grundplatte ein sich keilförmig von der einen Seite zur anderen Seite verbreitender Durchbruch vorgesehen,
- an der einen Seite der Grundplatte innerhalb des Durchbruches die Führungsschiene schwenkbeweglich über den Bereich des Ausbruches gelagert und
- an der Führungsschiene ein Schwenkhebel angeordnet ist, der an der gegenüberliegenden Seite der Grundplatte nach unten abgebogen ist, über den die Führungsschiene mit einem Knie des Benutzers dieser Vorrichtung hin- und herschwenkbar bzw. festhaltbar ist.

2. Vorrichtung nach Anspruch 1, **dadurch gekennzeichnet, daß** in einer Zusatzplatte zur Grundplatte im Bereich zwischen der Führungsleiste und dem Ende der Zusatzplatte in bestimmtem Abstand zueinander Längsnuten vorgesehen sind, in denen die Messerklinge ebenso wie in der Quernut oder Schrägnut geführt ist.

3. Vorrichtung nach Anspruch 1 oder 2, **dadurch gekennzeichnet, daß** die Führungsleiste über das eine Ende der Vorrichtung hinaus verlängert und nach unten abgewinkelt ist.

4. Vorrichtung nach einem der vorhergehenden Ansprüche, **dadurch gekennzeichnet, daß** zu beiden Seiten der Grundplatte in geringer Entfernung von den beiden Seiten der Grundplatte je ein Längenmaßstab mit steigender Länge in Richtung des vorderen Endes der Grundplatte angebracht ist.

5. Vorrichtung nach einem der vorhergehenden Ansprüche, **dadurch gekennzeichnet, daß** auf der Grundplatte ein weiteres Längenmaß mit steigender Länge in Richtung des rückwärtigen Endes der Grundplatte vorgesehen ist.
